# EUROPÄISCHE PATENTANMELDUNG

(11) **EP 1 488 921 A1**
(43) Veröffentlichungstag der Anmeldung: **22.12.2004**
(21) Anmeldenummer: 03405435.3
(22) Anmeldetag: 17.06.2003
(51) Int. Cl.: B32B 15/08, B65D 65/40

(54) **Kaltverformbares Laminat**

(71) Anmelder: Alcan Technology & Management Ltd., 8212 Neuhausen am Rheinfall (CH)
(72) Erfinder: Nägeli, Hans-Rudolf, 8212 Neuhausen (CH); Pasbrig, Erwin, 78224 Singen (DE)

(57) **Zusammenfassung**

Ein kaltverformbares Laminat für die Herstellung von Behältern zur Verpackung von pharmazeutischen und medizintechnischen Produkten und Diagnostika weist eine Aluminiumfolie mit einer auf einer ersten Seite angeordneten biaxial gereckten Kunststofffolie als Aussenschicht und einer auf der zweiten Seite angeordneten Siegelschicht auf. Die Aluminiumfolie ist mit der biaxial gereckten Kunststofffolie durch Extrusionskaschierung verbunden, oder die biaxial gereckte Kunststofffolie ist mit einem Polyolefin extrusionsbeschichtet und gegen die Aluminiumfolie lackkaschiert. Das Laminat lässt eine gegenüber Laminaten nach dem Stand der Technik um mindestens 15% höhere Kaltverformung zu und zeigt eine verbesserte Delaminationsbeständigkeit.

## Beschreibung

Die Erfindung betrifft ein kaltverformbares Laminat für die Herstellung von Behältern zur Verpackung von pharmazeutischen und medizintechnischen Produkten und Diagnostika, mit einer Aluminiumfolie, einer auf einer ersten Seite der Aluminiumfolie angeordneten biaxial gereckten Kunststofffolie als Aussenschicht und einer auf der zweiten Seite der Aluminiumfolie angeordneten Siegelschicht.

Für die Herstellung von Behältern zur Verpackung von pharmazeutischen und medizintechnischen Produkten und Diagnostika, wie z.B. Bodenteile von Blister- oder Durchdrückpackungen, sind kaltverformbare Laminate mit dem Aufbau biaxial gereckte Kunststofffolie / Aluminiumfolie / Siegelschicht (Lack, Kunststofffolie oder Kunststoffbeschichtung) bekannt. Die Verbindung der aussenseitigen Kunststofffolie mit der Aluminiumfolie erfolgt über einen Klebstoff, wobei die Aluminiumfolie überwiegend lackiert ist, um den Einfluss von Belegungen auf der Aluminiumfolie zu kompensieren. Es ist auch schon vorgeschlagen worden, die Verbindung zwischen einer aussenseitigen Folie aus biaxial gerecktem Polyamid und der Aluminiumfolie durch Heisskalandrierung herzustellen, wobei der Klebstoff bzw. das Kaschiermittel vorgängig aufgetragen und getrocknet wurde.

Mit den vorstehend erwähnten Laminaten kann eine maximale Verformbarkeit durch Kaltumformung von etwa 30% erzielt werden. Die Beständigkeit gegen Feuchte und Wärme, d.h. die Beständigkeit der aussenseitigen Kunststofffolie gegen Delamination, liegt unter ICH-Bedingungen bei maximal 26 Wochen.

Der Erfindung liegt die Aufgabe zugrunde, ein kaltverformbares Laminat der eingangs genannten Art zu schaffen, das im Vergleich zu den Laminaten nach dem Stand der Technik um mindestens 15% mehr Kaltverformung zulässt und eine Delaminationsbeständigkeit unter ICH-Bedingungen von mindestens 52 Wochen aufweist.

Zur erfindungsgemässen Lösung der Aufgabe führen grundsätzlich die folgenden zwei Wege:
1. Die Aluminiumfolie ist mit der biaxial gereckten Kunststofffolie der Aussenschicht durch Extrusionskaschierung verbunden.
   Die biaxial gereckte Kunststofffolie der Aussenschicht ist bevorzugt vom Typ PE (Polyethylen), PP (Polypropylen), PA (Polyamid), Polyester, PEN (Polyethylennaphthalat), COC (Cycloolefin-Ethylen-Copolymer) oder PS (Polystyrol). Die Foliendicke liegt im Bereich von 10 bis 50 µm, vorzugsweise 15 bis 30 µm.
   Geeignete Kaschiermittel sind haftungsmodifizierte Polyolefine, insbesondere PE-MAH (Polyethylen-Maleinsäureanhydrid-Pfropfpolymer), PP-MAH (Polypropylen-Maleinsäureanhydrid-Pfropfpolymer), EVA (Ethylen-Vinylacetat-Copolymer)-MAH oder PE-Copolymere, insbesondere EAA (Ethylen-Acrylsäure), EBA (Ethylen-Butylacrylat), EMA (Ethylen-Methacrylsäure), EEA (Ethylen-Ethylacrylat) oder lonomere. Die Dicke der Extrusionskaschierung liegt im Bereich von 2 bis 30 µm, vorzugsweise 3 bis 12 µm, als Monoschicht oder coextrudiert, z.B. PP-MAH/PP/PP-MAH.
   Bei einem besonders bevorzugten Laminataufbau besteht die Aussenschicht aus einer biaxial gereckten (orientierten) Polyamid-Folie (oPA-Folie), die mit PE-LLD (linear, niedrige Dichte)-MAH gegen die Aluminiumfolie extrusionskaschiert ist.
   Die biaxial orientierte Kunststofffolie und/oder die Aluminiumfolie können mit einem Primer beschichtet sein. Geeignete Primer sind wasser- oder lösungsmittelbasierende Polyimid, PP-MAH, EAA oder Acrylat oder dgl. Primer.
2. Die biaxial gereckte Kunststofffolie der Aussenschicht ist mit einem Polyolefin extrusionsbeschichtet und gegen die Aluminiumfolie lackkaschiert. Die mit dem Polyolefin beschichtete Seite der biaxial gereckten Kunststofffolie kann gegen die Aluminiumfolie oder gegen die Aussenseite gerichtet sein.
   Die biaxial gereckte Kunststofffolie der Aussenschicht ist bevorzugt vom Typ PE, PP, Polyamid, Polyester, PEN, COC oder Polystyrol und ist mit PE oder PP extrusionsbeschichtet. Die Extrusionsbeschichtung weist ein Auftragsgewicht im Bereich von 5 bis 40 g/m², vorzugsweise 10 bis 30 g/m², auf.

Beide Lösungswege führen zu Laminaten die den Anforderungen hinsichtlich Kaltverformungsgrad und Delaminationsbeständigkeit genügen.

Die Dicke der für die erfindungsgemässen Laminate verwendeten Aluminiumfolien liegt im Bereich von 20 bis 100 µm, vorzugsweise 30 bis 70 µm. Die Aluminiumfolie kann weich sein oder eine definierte Härte aufweisen.

Die erfindungsgemässen Laminate können auf bestehenden Abpackanlagen zu Verpackungsbehältern verarbeitet werden.

Die Innen- oder Siegelschicht kann eine ungereckte, mit der Aluminiumfolie lack- oder extrusionskaschierte Kunststofffolie sein. Bevorzugt sind Kunststofffolien auf Basis PVC (Polyvinylchlorid), PVDC (Polyvinylidenchlorid), PE, PP, Polyolefin-Copolymere, insbesondere EAA, EEA und lonomere, Polyamid, Polystyrol, COC, PET, PEN oder PCTFE (Polychlortetrafluorethylen, ACLAR® ). Die Dicke der Kunststofffolie oder einer Kombination von zwei oder mehr Folien liegt im Bereich von 10 bis 120 µm, vorzugsweise 19 bis 100 µm. Die Extrusionskaschierung kann z.B. mit einem PE-Terpolymer durchgeführt werden. Eine Lackkaschierung kann mit wässrigen, lösungsmittelbasierenden oder lösungsmittelfreien Kaschiermitteln durchgeführt werden.

Die Siegelschicht kann auch ein Polyolefin und die Aluminiumfolie mit der Siegelschicht extrusionsbeschichtet sein. Bevorzugte, durch Extrusionsbeschichtung hergestellte Siegelschichten bestehen aus polyolefinischen Kunststoffen, insbesondere aus PE, PP, EAA, EAA-PE-LD, oder einem lonomer, z.B. einem Natrium- oder Zinkacrylat Co- oder Terionomer wie SURLYN® , mit einem Auftragsgewicht im Bereich von 5 bis 80 g/m², vorzugsweise 15 bis 40 g/m², oder beschichtet mit PVDC mit einem Auftragsgewicht im Bereich von 5 bis 120 g/m², vorzugsweise 20 bis 60 g/m².

Extrusionskaschierte Siegelschichten oder durch Extrusionsbeschichtung hergestellte Siegelschichten sind umweltfreundlich, da sie kein Lösungsmittel benötigen und demzufolge die Atmosphäre auch nicht mit VOC's belastet wird.

Weitere bevorzugte Siegelschichten sind Heisssiegellacke auf Basis Acrylate, Polybutylate, Morprime, Styrolacrylat mit Polyolefingruppen, PVC/AC plus Acrylat, PP/Butadien oder Polyester/Butadien/Styrol, mit einem Auftragsgewicht im Bereich von 2 bis 20 g/m², vorzugsweise 5 bis 15 g/m².

Die Aluminiumfolie kann auch mit einem Primer beschichtet und die Siegelschicht auf den Primer aufgetragen sein. Geeignete Primer sind z.B. EAA oder Polyimid Primer.

Der für die Siegelschicht verwendete Kunststoff richtet sich nach dem Aufbau der zum Verschliessen der aus den Laminaten hergestellten Verpackungsbehälter vorgesehenen Deckfolien.

Weitere Vorteile, Merkmale und Einzelheiten der Erfindung ergeben sich aus der nachfolgenden Beschreibung bevorzugter Ausführungsbeispiele.

In der nachstehenden Tabelle ist eine Auswahl von erfindungsgemäss aufgebauten, kaltverformbaren Laminaten mit biaxial gerecktem, orientiertem Polyamid (oPA) als Aussenschicht zusammengestellt. Mit "Aussenseite" ist die beim Verpackungsbehälter die Aussenseite bildende, mit "Innenseite" die zur Siegelung gegen den Kunststoff einer Deckfolie gerichtete Seite des Laminates bezeichnet, jeweils unter Angabe des Auftragsgewichts bei Lackbeschichtung bzw. der Foliendicke bei Folienbeschichtung.

| | | | |
|---|---|---|---|
| 1 | oPa, 25 µm, extrusionskaschiert mit PE-LLDH-MAH, 10 µm | 45 µm | PVC-, PP- oder PE-Folie, lackkaschiert |
| 2 | oPa, 25 µm, extrusionskaschiert mit PE-LLDH-MAH, 10 µm | 45 µm | PVC-, PP- oder PE-Folie, extrusionskaschiert |
| 3 | oPa, 25 µm, extrusionskaschiert mit PE-LLDH-MAH, 10 µm | 45 µm | co-extrusionsbeschichtet mit EAA/PE-LD |
| 4 | oPa, 25 µm, extrusionskaschiert mit PE-LLDH-MAH, 10 µm, gegen Primer | 45 µm | PVC-, PP- oder PE-Folie, lackkaschiert |
| 5 | oPa, 25 µm, extrusionskaschiert mit PP-MAH, 10 µm | 45 µm | PVC-, PP- oder PE-Folie, lackkaschiert |
| 6 | oPa, 25 µm, extrusionskaschiert mit PP-MAH, 10 µm | 45 µm | PVC-, PP- oder PE-Folie, extrusionskaschiert |
| 7 | oPa, 25 µm, extrusionskaschiert mit PP-MAH, 10 µm | 45 µm | co-extrusionsbeschichtet mit EAA/PE-LD |
| 8 | oPa, 25 µm, extrusionskaschiert mit EVA-MAH, 10 µm, gegen Primer | 45 µm | PVC-, PP- oder PE-Folie, lackkaschiert |
| 9 | oPa, 25 µm, extrusionskaschiert mit EVA-MAH, 10 µm | 45 µm | PVC-, PP- oder PE-Folie, lackkaschiert |
| 10 | oPa, 25 µm, extrusionskaschiert mit EVA-MAH, 10 µm | 45 µm | PVC-, PP- oder PE-Folie, extrusionskaschiert |
| 11 | oPa, 25 µm, extrusionskaschiert mit EVA-MAH, 10 µm | 45 µm | co-extrusionsbeschichtet mit EAA/PE-LD |
| 12 | oPa, 25 µm, extrusionskaschiert mit EVA-MAH, 10 µm | 45 µm | PVC-, PP- oder PE-Folie, lackkaschiert |
| 13 | oPA, 25 µm / Primer, extrusionskaschiert mit EAA, 10 µm | 45 µm | PVC-, PP- oder PE-Folie, lackkaschiert |
| 14 | oPA, 25 µm / Primer, extrusionskaschiert mit EAA, 10 µm | 45 µm | PVC-, PP- oder PE-Folie, extrusionskaschiert |
| 15 | oPA, 25 µm / Primer, extrusionskaschiert mit EAA, 10 µm | 45 µm | co-extrusionsbeschichtet mit EAA/PE-LD |
| 16 | oPA, 25 µm / Primer, extrusionskaschiert mit EAA, 10 µm, gegen Primer | 45 µm | PVC-, PP- oder PE-Folie, lackkaschiert |
| 17 | oPA, 25 µm / Primer, extrusionskaschiert mit EAA, 10 µm, gegen Primer | 45 µm | PVC-, PP- oder PE-Folie, extrusionskaschiert |
| 18 | oPA, 25 µm / Primer, extrusionskaschiert mit EAA, 10 µm, gegen Primer | 45 µm | co-extrusionsbeschichtet mit EAA/PE-LD |
| 19 | oPA, 25 µm, extrusionskaschiert mit lonomer, 10 µm | 45 µm | PVC-, PP- oder PE-Folie, lackkaschiert |
| 20 | oPA, 25 µm, extrusionskaschiert mit lonomer, 10 µm | 45 µm | PVC-, PP- oder PE-Folie, extrusionskaschiert |
| 21 | oPA, 25 µm, extrusionskaschiert mit lonomer, 10 µm | 45 µm | co-extrusionsbeschichtet mit EAA/PE-LD |
| 22 | oPA, 25 µm, extrusionskaschiert mit lonomer, 10 µm, gegen Primer | 45 µm | PVC-, PP- oder PE-Folie, lackkaschiert |
| 23 | oPA, 25 µm / Primer, extrusionskaschiert mit lonomer, 10 µm | 45 µm | PVC-, PP- oder PE-Folie, lackkaschiert |
| 24 | oPA, 25 µm / Primer, extrusionskaschiert mit lonomer, 10 µm | 45 µm | PVC-, PP- oder PE-Folie, extrusionskaschiert |
| 25 | oPA, 25 µm / Primer, extrusionskaschiert mit lonomer, 10 µm | 45 µm | co-extrusionsbeschichtet mit EAA/PE-LD |
| 26 | oPA, 25 µm / Primer, extrusionskaschiert mit lonomer, 10 µm, gegen Primer | 45 µm | PVC-, PP- oder PE-Folie, lackkaschiert |
| 27 | oPA, 25 µm, extrusionskaschiert mit EMA, 10 µm | 45 µm | PVC-, PP- oder PE-Folie, lackkaschiert |
| 28 | oPA, 25 µm, extrusionskaschiert mit EMA, 10 µm | 45 µm | PVC-, PP- oder PE-Folie, extrusionskaschiert |
| 29 | oPA, 25 µm, extrusionskaschiert mit EMA, 10 µm | 45 µm | co-extrusionsbeschichtet mit EAA/PE-LD |
| 30 | oPA, 25 µm, extrusionskaschiert mit EMA, 10 µm, gegen Primer | 45 µm | PVC-, PP- oder PE-Folie, lackkaschiert |
| 31 | oPA, 25 µm, extrusionskaschiert mit EEA, 10 µm | 45 µm | PVC-, PP- oder PE-Folie, lackkaschiert |
| 32 | oPA, 25 µm, extrusionskaschiert mit EEA, 10 µm | 45 µm | PVC-, PP- oder PE-Folie, extrusionskaschiert |
| 33 | oPA, 25 µm, extrusionskaschiert mit EEA, 10 µm | 45 µm | co-extrusionsbeschichtet mit EAA/PE-LD |
| 34 | oPA, 25 µm, extrusionskaschiert mit EEA, 10 µm, gegen Primer | 45 µm | PVC-, PP- oder PE-Folie, lackkaschiert |
| 35 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | oPA, 25 µm, extrusionsbeschichtet mit PE, 20 g/m², lackkaschiert, PE-Schicht liegt gegen Al-Folie |
| 36 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | oPA, 25 µm, extrusionsbeschichtet mit PP, 20 g/m², lackkaschiert gegen Primer, PE-Schicht liegt gegen Al-Folie |
| 37 | oPA, 25 µm, extrusionsbeschichtet mit PE, 20 g/m², lackkaschiert mit lösungsmittelhaltigem Kaschiermittel, PE-Schicht liegt gegen Al-Folie | 45 µm | oPA, 25 µm, extrusionsbeschichtet mit PE, 20 g/m², lackkaschiert, PE-Schicht liegt gegen Al-Folie |
| 38 | oPA, 25 µm, extrusionsbeschichtet mit PE, 20 g/m², lackkaschiert mit lösungsmittelhaltigem Kaschiermittel, PE-Schicht liegt gegen Al-Folie | 45 µm | oPA, 25 µm, extrusionsbeschichtet mit PP, 20 g/m², lackkaschiert gegen Primer, PE-Schicht liegt gegen Al-Folie |
| 39 | oPA, 25 µm,extrusionsbeschichtet mit PE, 20 g/m², lackkaschiert mit lösungsmittelhaltigem Kaschiermittel gegen Primer, PE-Schicht liegt gegen Al-Folie | 60 µm | oPA, 25 µm, extrusionsbeschichtet mit PE, 20 g/m², lackkaschiert, PE-Schicht liegt gegen Al-Folie |
| 40 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 60 µm | oPA, 25 µm, extrusionsbeschichtet mit PE, 20 g/m², lackkaschiert gegen Primer, PE-Schicht liegt gegen Al-Folie |
| 41 | oPA, 25 µm, extrusionsbeschichtet mit PE, 20 g/m², lackkaschiert mit lösungsmittelhaltigem Kaschiermittel, PE-Schicht liegt gegen Al-Folie | 60 µm | oPA, 25 µm, extrusionsbeschichtet mit PE, 20 g/m², lackkaschiert, PE-Schicht liegt gegen Al-Folie |
| 42 | oPA, 25 µm, extrusionsbeschichtet mit PE, 20 g/m², lackkaschiert mit lösungsmittelhaltigem Kaschiermittel, PE-Schicht liegt gegen Al-Folie | 60 µm | oPA, 25 µm, extrusionsbeschichtet mit PE, 20 g/m², lackkaschiert gegen Primer, PE-Schicht liegt gegen Al-Folie |
| 43 | oPA, 25 µm, extrusionsbeschichtet mit PE, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PE, 20 g/m², lackkaschiert, oPA-Folie liegt gegen Al-Folie |
| 44 | oPA, 25 µm, extrusionsbeschichtet mit PE, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PE, 20 g/m², lackkaschiert gegen Primer, oPA-Folie liegt gegen Al-Folie |
| 45 | oPA, 25 µm, extrusionsbeschichtet mit PE, 20 g/m², lackkaschiert mit lösungsmittelhaltigem Kaschiermittel, oPA-Folie liegt gegen Al-Folie | 45 µm | oPA, 25 µm, extrusionsbeschichtet mit PE, 20 g/m², lackkaschiert, oPA-Folie liegt gegen Al-Folie |
| 46 | oPA, 25 µm, extrusionsbeschichtet mit PE, 20 g/m², lackkaschiert mit lösungsmittelhaltigem Kaschiermittel, oPA-Folie liegt gegen Al-Folie | 45 µm | oPA, 25 µm, extrusionsbeschichtet mit PE, 20 g/m², lackkaschiert gegen Primer, oPA-Folie liegt gegen Al-Folie |
| 47 | oPA, 25 µm, extrusionsbeschichtet mit PE, 20 g/m², lackkaschiert mit lösungsmittelhaltigem Kaschiermittel gegen Primer, oPA-Folie liegt gegen Al-Folie | 60 µm | oPA, 25 µm, extrusionsbeschichtet mit PE, 20 g/m², lackkaschiert, oPA-Folie liegt gegen Al-Folie |
| 48 | oPA, 25 µm, extrusionsbeschichtet mit PE, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PE, 20 g/m², lackkaschiert gegen Primer, oPA-Folie liegt gegen Al-Folie |
| 49 | oPA, 25 µm, extrusionsbeschichtet mit PE, 20 g/m², lackkaschiert mit lösungsmittelhaltigem Kaschiermittel, oPA-Folie liegt gegen Al-Folie | 45 µm | oPA, 25 µm, extrusionsbeschichtet mit PE, 20 g/m², lackkaschiert, oPA-Folie liegt gegen Al-Folie |
| 50 | oPA, 25 µm, extrusionsbeschichtet mit PE, 20 g/m², lackkaschiert mit lösungsmittelhaltigem Kaschiermittel, oPA-Folie liegt gegen Al-Folie | 45 µm | oPA, 25 µm, extrusionsbeschichtet mit PE, 20 g/m², lackkaschiert gegen Primer, oPA-Folie liegt gegen Al-Folie |
| 51 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | oPA, 25 µm, extrusionsbeschichtet mit PP, 20 g/m², lackkaschiert, PP-Schicht liegt gegen Al-Folie |
| 52 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | oPA, 25 µm, extrusionsbeschichtet mit PP, 20 g/m², lackkaschiert gegen Primer, PP-Schicht liegt gegen Al-Folie |
| 53 | oPA, 25 µm, extrusionsbeschichtet mit PP, 20 g/m², lackkaschiert mit lösungsmittelhaltigem Kaschiermittel, PP-Schicht liegt gegen Al-Folie | 45 µm | oPA, 25 µm, extrusionsbeschichtet mit PP, 20 g/m², lackkaschiert, PP-Schicht liegt gegen Al-Folie |
| 54 | oPA, 25 µm, extrusionsbeschichtet mit PP, 20 g/m², lackkaschiert mit lösungsmittelhaltigem Kaschiermittel, PP-Schicht liegt gegen Al-Folie | 45 µm | oPA, 25 µm, extrusionsbeschichtet mit PP, 20 g/m², lackkaschiert gegen Primer, PP-Schicht liegt gegen Al-Folie |
| 55 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | oPA, 25 µm, extrusionsbeschichtet mit PP, 20 g/m², lackkaschiert, PP-Schicht liegt gegen Al-Folie |
| 56 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | oPA, 25 µm, extrusionsbeschichtet mit PP, 20 g/m², lackkaschiert gegen Primer, PP-Schicht liegt gegen Al-Folie |
| 57 | oPA, 25 µm, extrusionsbeschichtet mit PP, 20 g/m², lackkaschiert mit lösungsmittelhaltigem Kaschiermittel, PP-Schicht liegt gegen Al-Folie | 60 µm | oPA, 25 µm, extrusionsbeschichtet mit PP, 20 g/m², lackkaschiert, PP-Schicht liegt gegen Al-Folie |
| 58 | oPA, 25 µm, extrusionsbeschichtet mit PP, 20 g/m², lackkaschiert mit lösungsmittelhaltigem Kaschiermittel, PP-Schicht liegt gegen Al-Folie | 60 µm | oPA, 25 µm, extrusionsbeschichtet mit PP, 20 g/m², lackkaschiert gegen Primer, PP-Schicht liegt gegen Al-Folie |
| 59 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 60 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 61 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 62 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 63 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 60 µm | oPA, 25 µm, extrusionsbeschichtet mit PP, 20 g/m², lackkaschiert, oPA-Folie liegt gegen Al-Folie |
| 64 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 65 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 66 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 67 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | oPA, 25 µm, extrusionsbeschichtet mit PP, 20 g/m², lackkaschiert, PP-Schicht liegt gegen Al-Folie |
| 68 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | oPA, 25 µm, extrusionsbeschichtet mit PP, 20 g/m², lackkaschiert gegen Primer, PP-Schicht liegt gegen Al-Folie |
| 69 | oPA, 25 µm, extrusionsbeschichtet mit PP, 20 g/m², lackkaschiert mit lösungsmittelhaltigem Kaschiermittel, PP-Schicht liegt gegen Al-Folie | 45 µm | oPA, 25 µm, extrusionsbeschichtet mit PP, 20 g/m², lackkaschiert, PP-Schicht liegt gegen Al-Folie |
| 70 | oPA, 25 µm, extrusionsbeschichtet mit PP, 20 g/m², lackkaschiert mit lösungsmittelhaltigem Kaschiermittel, PP-Schicht liegt gegen Al-Folie | 45 µm | oPA, 25 µm, extrusionsbeschichtet mit PP, 20 g/m², lackkaschiert gegen Primer, PP-Schicht liegt gegen Al-Folie |
| 71 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | oPA, 25 µm, extrusionsbeschichtet mit PP, 20 g/m², lackkaschiert, PP-Schicht liegt gegen Al-Folie |
| 72 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | oPA, 25 µm, extrusionsbeschichtet mit PP, 20 g/m², lackkaschiert gegen Primer, PP-Schicht liegt gegen Al-Folie |
| 73 | oPA, 25 µm, extrusionsbeschichtet mit PP, 20 g/m², lackkaschiert mit lösungsmittelhaltigem Kaschiermittel, PP-Schicht liegt gegen Al-Folie | 60 µm | oPA, 25 µm, extrusionsbeschichtet mit PP, 20 g/m², lackkaschiert, PP-Schicht liegt gegen Al-Folie |
| 74 | oPA, 25 µm, extrusionsbeschichtet mit PP, 20 g/m², lackkaschiert mit lösungsmittelhaltigem Kaschiermittel, PP-Schicht liegt gegen Al-Folie | 60 µm | oPA, 25 µm, extrusionsbeschichtet mit PP, 20 g/m², lackkaschiert gegen Primer, PP-Schicht liegt gegen Al-Folie |
| 75 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 76 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 77 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 78 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 79 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 60 µm | oPA, 25 µm, extrusionsbeschichtet mit PP, 20 g/m², lackkaschiert, oPA-Folie liegt gegen Al-Folie |
| 80 | oPA, 25 µm, extrusionsbeschichtet mit PP, 20 g/m², lackkaschiert mit lösungsmittelhaltigem Kaschiermittel gegen Primer, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 81 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert, oPA-Folie liegt gegen Al-Folie |
| 82 | oPA, 25 µm, extrusionsbeschichtet mit PP, 20 g/m², lackkaschiert mit lösungsmittelhaltigem Kaschiermittel, oPA-Folie liegt gegen Al-Folie | 45 µm | oPA, 25 µm, extrusionsbeschichtet mit PP, 20 g/m², lackkaschiert gegen Primer, oPA-Folie liegt gegen Al-Folie |
| 83 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | PVC-Folie, 60 µm, lackkaschiert |
| 84 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | PVC-Folie, 30 µm, lackkaschiert |
| 85 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | PP-Folie, 60 µm, lackkaschiert |
| 86 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 60 µm | PP-Folie, 60 µm, lackkaschiert |
| 87 | oPA, 25 µm, extrusionsbeschichtet mit PE, 20 g/m² , lackkaschiert mit lösungsmittelhaltigem Kaschiermittel gegen Primer, PE-Schicht liegt gegen Al-Folie | 45 µm | PE-Folie, 60 µm, lackkaschiert |
| 88 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 60 µm | PE-Folie, 60 µm, lackkaschiert |
| 89 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | PVC-Folie, 100 µm, lackkaschiert |
| 90 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | COC-Folie, 20 µm, lackkaschiert |
| 91 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 60 µm | COC-Folie, 20 µm, lackkaschiert |
| 92 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | ACLAR®-Folie, 23 µm, lackkaschiert |
| 93 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | ACLAR®-Folie, 15 µm, lackkaschiert |
| 94 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | extrusionsbeschichtet mit SURLYN®, 20 g/m² |
| 95 | oPA, 25 µm, extrusionsbeschichtet mit PE, 20 g/m², lackkaschiert mit lösungsmittelhaltigem Kaschiermittel gegen Primer, PE-Schicht liegt gegen Al-Folie | 45 µm | extrusionsbeschichtet mit PE, 20 g/m² |
| 96 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | PVC-Folie, 60 µm, lackkaschiert |
| 97 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | PVC-Folie, 30 µm, lackkaschiert |
| 98 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | PP-Folie, 60 µm, lackkaschiert |
| 99 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 60 µm | PP-Folie, 60 µm, lackkaschiert |
| 100 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | PE-Folie, 60 µm, lackkaschiert |
| 101 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 60 µm | PE-Folie, 60 µm, lackkaschiert |
| 102 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | PVC-Folie, 100 µm, lackkaschiert |
| 103 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | COC-Folie, 20 µm, lackkaschiert |
| 104 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 60 µm | COC-Folie, 20 µm, lackkaschiert |
| 105 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | ACLAR®-Folie, 23 µm, lackkaschiert |
| 106 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | ACLAR®-Folie, 15 µm, lackkaschiert |
| 107 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | extrusionsbeschichtet mit SURLYN®, 20 g/m² |
| 108 | oPA, 25 µm, extrusionsbeschichtet mit PE, 20 g/m², lackkaschiert mit lösungsmittelhaltigem Kaschiermittel gegen Primer, oPA-Schicht liegt gegen Al-Folie | 45 µm | extrusionsbeschichtet mit PE, 20 g/m² |
| 109 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | PVC-Folie, 60 µm, lackkaschiert |
| 110 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | PVC-Folie, 30 µm, lackkaschiert |
| 111 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | PP-Folie, 60 µm, lackkaschiert |
| 112 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | PP-Folie, 60 µm, lackkaschiert |
| 113 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | PE-Folie, 60µm, lackkaschiert |
| 114 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | PE-Folie, 60 µm, lackkaschiert |
| 115 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | PVC-Folie, 100 µm, lackkaschiert |
| 116 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | COC-Folie, 20 µm, lackkaschiert |
| 117 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 60 µm | COC-Folie, 20 µm, lackkaschiert |
| 118 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | ACLAR®-Folie, 23 µm, lackkaschiert |
| 119 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | ACLAR®-Folie, 15 µm, lackkaschiert |
| 120 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | extrusionsbeschichtet mit SURLYN®, 20 g/m² |
| 121 | oPA, 25 µm, extrusionsbeschichtet mit PP, 20 g/m², lackkaschiert mit lösungsmittelhaltigem Kaschiermittel gegen Primer, PP-Schicht liegt gegen Al-Folie | 45 µm | extrusionsbeschichtet mit PE, 20 g/m² |
| 122 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PVC-Folie, 60 µm, lackkaschiert |
| 123 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PVC-Folie, 30 µm, lackkaschiert |
| 124 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PP-Folie, 60 µm, lackkaschiert |
| 125 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | PP-Folie, 60 µm, lackkaschiert |
| 126 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PE-Folie, 60 µm, lackkaschiert |
| 127 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | PE-Folie, 60 µm, lackkaschiert |
| 128 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PVC-Folie, 100 µm, lackkaschiert |
| 129 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | COC-Folie, 20 µm, lackkaschiert |
| 130 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | COC-Folie, 20 µm, lackkaschiert |
| 131 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | ACLAR®-Folie, 23 µm, lackkaschiert |
| 132 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | ACLAR® -Folie, 15 µm, lackkaschiert |
| 133 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | extrusionsbeschichtet mit SURLYN®, 20 g/m² |
| 134 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | extrusionsbeschichtet mit PE, 20 g/m² |
| 135 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 50 µm | PE-Folie, 40 µm, lackkaschiert |
| 136 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | PVDC-Folie, 19 µm, lackkaschiert |
| 137 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | PVDC-Folie, 19 µm, lackkaschiert |
| 138 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | lackiert mit PVC/AC plus Acrylat, 10 g/m² |
| 139 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | lackiert mit PVC/AC plus Acrylat, 10 g/m² |
| 140 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | lackiert mit PP/Butadien, 7 g/m² |
| 141 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | lackiert mit PP/Butadien, 7 g/m² |
| 142 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 45 µm | lackiert mit Polyester/Butadien/Styrol, 7 g/m² |
| 143 | oPA, 25 µm, extrusionsbeschichtet mit PP, 20 g/m², lackkaschiert mit lösungsmittelhaltigem Kaschiermittel gegen Primer, oPA-Schicht liegt gegen Al-Folie | 60 µm | lackiert mit lackiert mit Polyester/Butadien/Styrol, 7 g/m² |

Kaltverformung zu und zeigt eine verbesserte Delaminationsbeständigkeit Die vorstehend erwähnten Beispiele stellen eine Auswahl bevorzugter Laminate dar. Die Erfindung ist nicht auf die genannten Beispiele begrenzt.

## Patentansprüche

1. Kaltverformbares Laminat für die Herstellung von Behältern zur Verpackung von pharmazeutischen und medizintechnischen Produkten und Diagnostika, mit einer Aluminiumfolie, einer auf einer ersten Seite der Aluminiumfolie angeordneten biaxial gereckten Kunststofffolie als Aussenschicht und einer auf der zweiten Seite der Aluminiumfolie angeordneten Siegelschicht,
**dadurch gekennzeichnet, dass**
die Aluminiumfolie mit der biaxial gereckten Kunststofffolie durch Extrusionskaschierung verbunden ist.

2. Kaltverformbares Laminat für die Herstellung von Behältern zur Verpackung von pharmazeutischen und medizintechnischen Produkten und Diagnostika, mit einer Aluminiumfolie, einer auf einer ersten Seite der Aluminiumfolie angeordneten biaxial gereckten Kunststofffolie als Aussenschicht und einer auf der zweiten Seite der Aluminiumfolie angeordneten Siegelschicht,
**dadurch gekennzeichnet, dass**
die biaxial gereckte Kunststofffolie mit einem Polyolefin extrusionsbeschichtet und gegen die Aluminiumfolie lackkaschiert ist.

3. Kaltverformbares Laminat nach Anspruch 1 oder 2, **dadurch gekennzeichnet, dass** die Siegelschicht eine ungereckte Kunststofffolie ist und mit der Aluminiumfolie lack- oder extrusionskaschiert ist.

4. Kaltverformbares Laminat nach Anspruch 1 oder 2, **dadurch gekennzeichnet, dass** die Siegelschicht ein Polyolefin ist und die Aluminiumfolie mit der Siegelschicht extrusionsbeschichtet ist.

5. Kaltverformbares Laminat nach Anspruch 1 oder 2, **dadurch gekennzeichnet, dass** die Siegelschicht ein Heisssiegellack ist.

6. Kaltverformbares Laminat nach Anspruch 1, **dadurch gekennzeichnet, dass** die biaxial gereckte Kunststofffolie der Aussenschicht vom Typ PE, PP, Polyamid, Polyester, PEN, COC oder Polystyrol ist und mit haftungsmodifizierten Polyolefinen, insbesondere PE-MAH, PP-MAH, EVA-MAH oder Polyethylen Copolymeren, insbesondere EAA, EMA, EEA oder lonomere, gegen die Aluminiumfolie extrusionskaschiert ist.

7. Kaltverformbares Laminat nach Anspruch 6, **dadurch gekennzeichnet, dass** die Dicke der biaxial gereckten Kunststofffolie 10 bis 50 µm, vorzugsweise 15 bis 30 µm beträgt.

8. Kaltverformbares Laminat nach Anspruch 6, **dadurch gekennzeichnet, dass** die Aluminiumfolie mit einem Primer beschichtet ist.

9. Kaltverformbares Laminat nach Anspruch 2, **dadurch gekennzeichnet, dass** die biaxial gereckte Kunststofffolie der Aussenschicht vom Typ PE, PP, Polyamid, Polyester, PEN, COC oder Polystyrol und mit PE oder PP extrusionsbeschichtet ist.

10. Kaltverformbares Laminat nach Anspruch 9, **dadurch gekennzeichnet, dass** das Auftragsgewicht der Extrusionsbeschichtung 5 bis 40 g/m², vorzugsweise 15 bis 30 g/m², beträgt.

11. Kaltverformbares Laminat nach Anspruch 3, **dadurch gekennzeichnet, dass** die Siegelschicht eine ungereckte Kunststofffolie auf Basis PVC, PVDC, PE, PP, Polyolefin-Copolymere, insbesondere EAA, EEA und lonomere, Polyamid, Polystyrol, COC, PET, PEN oder PCTFE ist.

12. Kaltverformbares Laminat nach Anspruch 11, **dadurch gekennzeichnet, dass** die Dicke der Siegelschicht 10 bis 120 µm, vorzugsweise 19 bis 100 µm beträgt.

13. Kaltverformbares Laminat nach Anspruch 4, **dadurch gekennzeichnet, dass** die Siegelschicht PE, PP, EAA oder ein lonomer ist.

14. Kaltverformbares Laminat nach Anspruch 5, **dadurch gekennzeichnet, dass** die Siegelschicht ein Heisssiegellack auf Basis Acrylate, Polybutylate, Morprime, Styrolacrylat mit Polyolefingruppen, PVC/AC plus Acrylat, PP/Butadien oder Polyester/Butadien/Styrol ist.

15. Kaltverformbares Laminat nach Anspruch 14, **dadurch gekennzeichnet, dass** das Auftragsgewicht des Heisssiegellackes 2 bis 20 g/m², vorzugsweise 5 bis 15 g/m², beträgt.

16. Kaltverformbares Laminat nach einem der Ansprüche 11 bis 15, **dadurch gekennzeichnet, dass** die Aluminiumfolie mit einem Primer beschichtet und die Siegelschicht auf den Primer aufgetragen ist.
